# EUROPEAN PATENT SPECIFICATION

(11) **EP 4 082 944 B1**
(45) Date of publication and mention of the grant of the patent: **06.11.2024**
(21) Application number: 21215294.6
(22) Date of filing: 16.12.2021
(51) Int. Cl.: B65G 17/12, A01D 87/00, B65G 47/58, B65G 69/18

(54) **SLIDING BAND MULTI-ELEVATOR FILING SYSTEM NOT REQUIRING ELEVATOR PIT**
GLEITBAND-MEHRFACHAUFZUG-ABLAGESYSTEM OHNE NOTWENDIGKEIT EINES AUFZUGSSCHACHTS
SYSTÈME DE CLASSEMENT À BANDE COULISSANTE POUR ÉLÉVATEURS MULTIPLES NE NÉCESSITANT PAS DE FOSSE D'ASCENSEUR

(30) Priority: 29.04.2021 TR 202107321
(43) Date of publication of application: 02.11.2022
(73) Proprietor: Altuntas Havalandirma Turizm Sanayi Anonim Sirketi, Aksaray (TR)
(72) Inventor: ALTUNTAS, OSMAN, AKSARAY (TR)
(74) Representative: Yamankaradeniz, Kemal

(56) References cited:
- WO-A1-2020/150808
- JP-A- 2019 216 630
- JP-A- H1 159 886
- JP-U- S6 247 511

## Description

### Technical Field

The invention relates to grain transfer system not needing elevator pit in grain storage systems, providing reduction of number of system components used for, power need, physical area, installation, repair period and costs of grain transfer operation.

Invention particularly relates to a grain transfer system used in grain storage systems and providing installation of elevators enabling transfer of grain on axis extending vertical to ground directly on ground and thus not needing drilling of elevator pit, thus providing reduction of number of system components used for installation and maintenance operations period after installation, total, power need consumed for system operation and physical area used for installation.

### State of the Art

Grains supplied into grain storage systems are firstly poured into parts where grains are collected and called goods/tram pit. Grains taken from goods input pits are carried on axis extending parallel to ground in general, by means of horizontal conveying members such as chain conveyors, band conveyors and/or screw coil conveyors and transferred to vertical conveying members called elevators and extending on axis extending rectangular to ground. In order to enable pour of grains transferred on horizontal convey members into vertical conveying members grain input parts of vertical conveying members are required to be deeper than goods intake pits. For that reason said vertical conveying members are located inside elevator pits located under base level of goods intake pits and having depth of minimum 4 meters in general. For distribution of grains transferred via horizontal conveying members into more than one vertical conveying member, distribution members extending into pit where vertical conveying members are located and called distributors, pipes and/or connection parts are used. For instance, it is needed to use 2 conveyors, 2 distributors providing 2-path distribution for transfer of grains carried on conveyors to elevators and flow pipe of approximately 6 meters long. Similarly, systems comprising double tram and 3 elevators need use of 3 distributors with 2 paths and flow pipe of about 15 meters length, 8 elevators need 4 distributors with 2 paths, flow pipe of about 48 meters length and distributor covers.

However, since depth of the elevator pits where vertical conveying members are located is high, period of construction and cost for construction of said pits are high. Particularly, installation operation for drilling elevator pits of high depth value on grounds having water source or rock structure is much more difficult and even in some cases it is impossible. In addition, distributors, flow pipe and/or connection parts of high number are required for convey of grains conveyed on horizontal convey members into vertical convey members. Due to increase in grain storage system and number of elevators used therein, the quantity of distributors, flow pipes and connection parts used in the system also increases and results in increase in total cost of the system. In case of failure in engines providing mechanical power required for operation of said distributors, flow pipes, connection parts and/or each elevator, repair operations are to be conducted in elevator pit of minimum 4 meters depth. This not only causes difficulties in repair operations but also increase of repair period and costs.

In the related art patent document numbered US2977004A discloses a grain convey system providing transfer of grain like farm products on axis extending rectangular to ground and storage thereof in bins. Said system comprises loading chamber convenient for discharge of whole product inside vehicle or trailer, shaft providing location of system along axis vertical to ground, conveying container moving on axis extending vertical to ground along shaft and taking product discharged into loading chamber and removal thereof from ground and discharge into bin, pulley and belts providing movement of conveying container on axis vertical to ground. Good discharging operation is performed quickly at one operation thanks to said system. In addition, document discloses placement of loading chamber inside a deep pit provided on ground in order to facilitate product discharge operation. However, said document does not disclose placement of loading chamber directly onto ground or facilitating in case of drilling pit wherein loading chamber is located and/or repair operations in case of failures of system members inside pit. Additionally, said system does not suggest any solutions for reduction of installation period and cost for construction of loading chamber and/or reduction of repair period and costs needed for repair of system members which are difficult to be reached inside pit.

Another patent in the related art numbered US4799584A discloses a grain convey system providing transfer of grain like farm products on axis extending rectangular to ground and transfer thereof in bins. Said system comprises loading chamber convenient for pour of grains there into, convey container providing taking grains in loading chamber and carrying on axis extending vertical to ground, base and ceiling pulleys providing movement of convey container on axis extending vertical to ground, belt extending between base and ceiling pulleys and providing transmission of motion, hydraulic driver unit providing rotation of base pulley, electric engine providing transmission of fluid to hydraulic driver unit. Said document does not disclose placement of loading chamber therein into a pit deeper than ground level, and placement of hydraulic driving unit and electric motor outside pit at a distance from system in order to facilitate access thereto in case of any failure. Thus it is aimed to facilitate repair operations and increase security. However, said document does not disclose installation of loading chamber directly onto ground, and does not disclose reduction of installation period and cost for drilling said pit and placement of members of system into said pit, reduction of maintenance and repair operations and costs for other system members located inside the pit.

WO2020150808A1 discloses a portable conveyor system receives and conveys particulate material to downstream equipment. The system includes a base frame, a material handling assembly carried on the base frame for depositing the material into the downstream equipment, and at least one adjustable feed conveyor to convey the material from a source onto the material handling assembly. The feed conveyor is movable in various manners relative to the base frame between a working position and a stored position. The material handling assembly includes a main conveyor assembly to convey material along the base frame from the feed conveyors to an elevating assembly at one end of the base frame. The elevating assembly is collapsible in height relative to the base frame for transport. WO2020150808A1 discloses a conveyor system according to the preamble of claim 1.

As a result, invention particularly relates to a grain transfer system used in grain storage systems and providing installation of elevators enabling transfer of grain on axis extending vertical to ground directly on ground and thus not needing drilling of elevator pit, providing transfer of grains into elevators without need for distributor and/or transfer pipe thus providing reduction of number of system components used for installation and maintenance operations period after installation, power need consumed for system operation and physical area used for installation.

### Aim of the Invention

The present invention relates to a grain convey system meeting the needs mentioned above, eliminating potential disadvantages and providing some additional advantages.

Main aim of the grain convey system of the invention is to obtain a grain convey system allowing directly installation of elevators in grain storage systems onto ground and thus providing installation of system without need for drilling elevator pit.

Another aim of the invention is to achieve a grain convey system providing convey of grain into elevators without need for distributor and/or conveying and providing reducing total number of system members used for grain convey.

A further aim of the invention is to achieve a grain convey system providing short length of elevators on axis extending vertical to ground and thus providing reduction in power quantity needed for conveying grain along axis vertical to ground.

Another aim of the invention is to achieve a grain convey system providing facilitation of installation/construction works of the system and reduction in time period and costs of system installation.

A further aim of the invention is to achieve a grain convey system providing facilitation of access to, repair and maintenance operations of members of the system after installation process, reduction in time and costs needed for maintenance and repair works.

Another aim of the invention is to achieve a grain convey system providing reduction in total physical area needed for system installation and operation.

In order to achieve above mentioned purposes in the most general case, the present invention develops a grain convey system comprising at least one grain collection unit of structure convenient for collection of grains therein, at least one storage unit, at least two primary convey units providing convey of grains into storage unit, at least one secondary convey unit providing transfer of grains received from grain collection unit to primary convey units, convenient for use in at least one grain storage system, providing installation of primary convey units (A) directly onto ground, providing reduction of number of members used in grain storage system and reduction of quantity of power consumed, facilitating access to members of the system for repair operations, reduction of time period and costs for installation, maintenance and/or repair works of the system. Grain convey system comprises at least one body member comprising at least one sliding member of slide structure and providing carrying of members of the system connected thereon. In addition, it comprises at least one transfer member providing convey of grains transferred from secondary convey unit on the axis parallel to ground and vertical to axis of secondary convey unit axis and thus transferring into primary convey units. Furthermore, it comprises at least a primary driving member providing movement of convey member in a primary direction thus helping transfer of grains into one of primary convey units, providing movement of convey member in a secondary direction and thus convey of grains into another unit of primary convey units, at least a secondary driving member providing slide of convey member and bringing into a position convenient for convey of grain into primary convey units.

The structural and characteristics features of the invention and all advantages will be understood better in detailed descriptions with the figures given below and with reference to the figures, and therefore, the assessment should be made taking into account the said figures and detailed explanations.

### Brief Description of the Drawings

In order to make the embodiment being subject of the present invention as well as the advantages clearer for better understanding, it should be assessed with reference to the fallowing described figures.
Figure 1 is a perspective view of grain convey system of the invention.

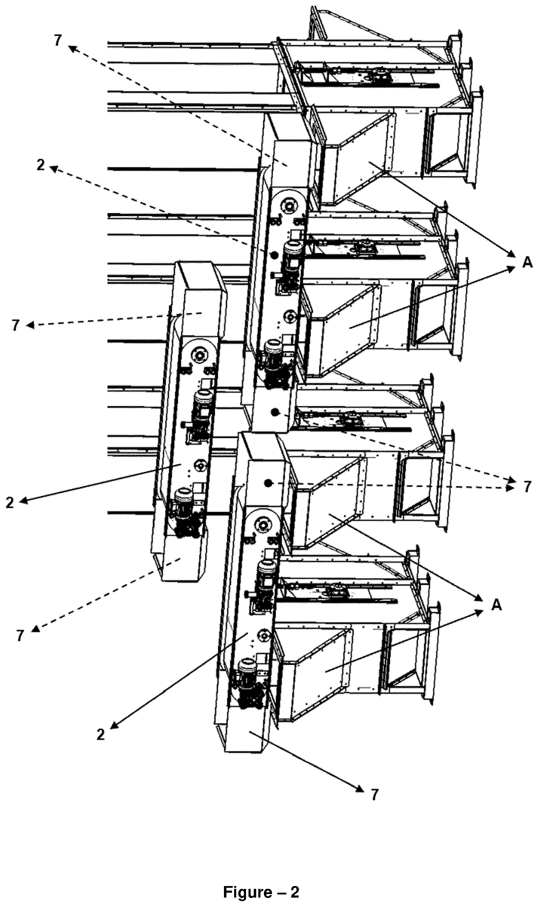

Figure 2 is another perspective view of grain convey system of the invention.

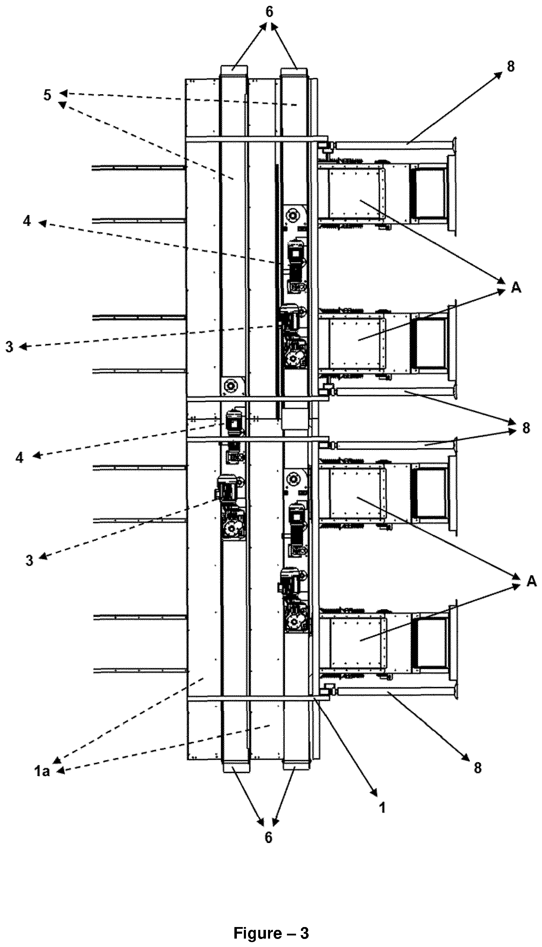

Figure 3 is a view of grain convey system of the invention from opposite direction.

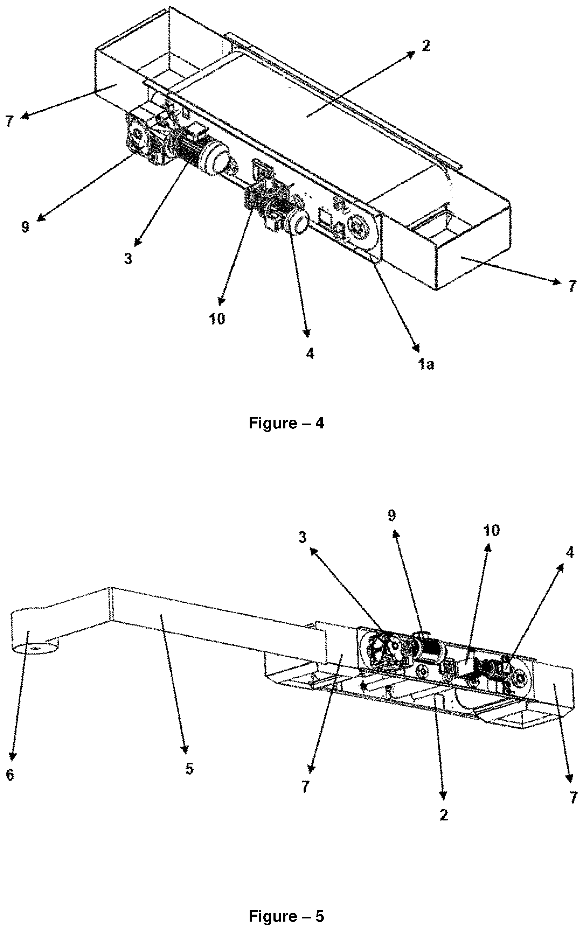

Figure 4 is a perspective view of convey member in grain convey system of the invention.
Figure 5 is another perspective view of convey member in grain convey system of the invention.

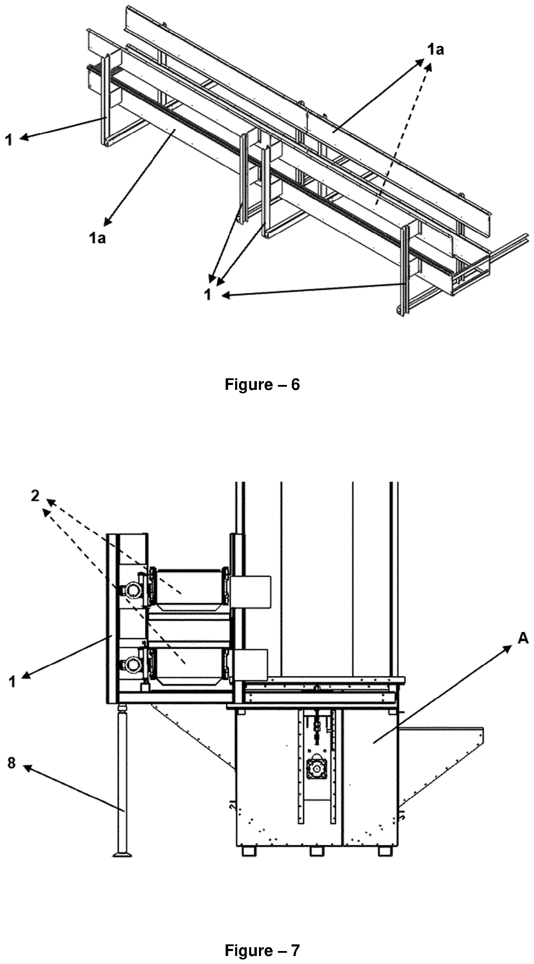

Figure 6 is a perspective view of body member in grain convey system of the invention.
Figure 7 is another view of grain convey system of the invention from opposite direction.

### Part References

- 1.: Body member
- 1a.: Sliding member
- 2.: Convey member
- 3.: Primary driving member
- 4.: Secondary driving member
- 5.: Protection member
- 6.: Moving member
- 7.: Secondary protection member
- 8.: Foot
- 9.: Primary conversion member
- 10.: Secondary conversion member

### Detailed Description of the Invention

In this detailed description, the preferred embodiments of the grain convey system being subject of the invention have been described in a manner not forming any restrictive effect and only for purpose of better understanding of the matter.

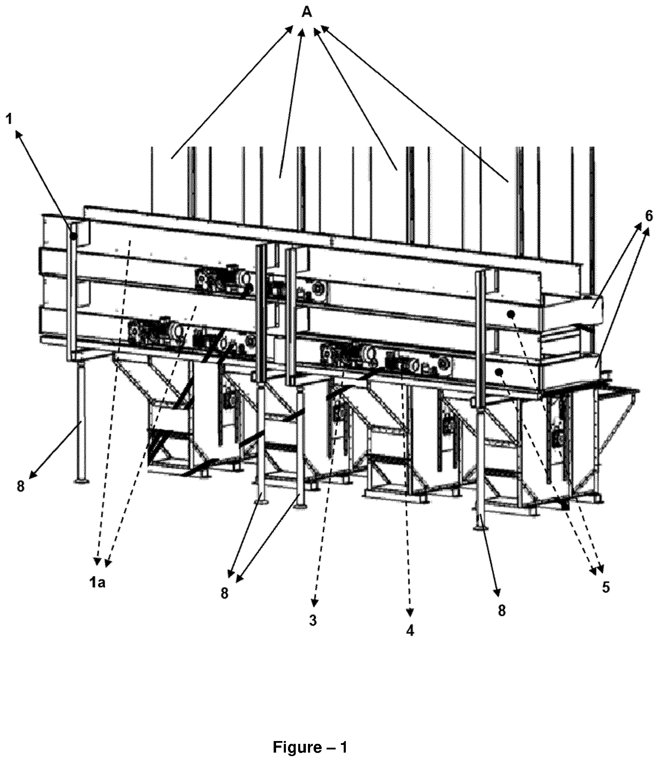

The invention of which an illustrative view is shown in Figure 1 develops a grain convey system comprising at least one grain collection unit which is a good taking/tram pit in a structure convenient for collection of grains therein comprising at least a primary opening allowing pour of grains therein and allowing removal of grains therein and preferably in hopper form, at least one storage unit providing storage of grains therein and preferably in bin, horizontal store and/or vertical store structure, at least two primary convey units (A) preferably elevators, providing transfer of grains into storage unit by carrying them in a way removing from ground, at least one secondary convey unit preferably a chain conveyor, band conveyor and/or screw spiral conveyor, extending from secondary opening to primary convey unit (A) parallel to ground or extending in a manner to form an angle with ground, providing transfer of grains taken from grain collection unit to primary convey units (A) convenient for use in at least a grain storage system, providing installation of primary convey units (A) directly on the ground without need for any pit and thus providing reduction of number of members used in grain storage system for distribution and transfer of grain to primary convey units (A) and reduction in power needed for convey of grain to said storage unit, facilitating access to members of the system for repair works after installation, reduction in time period and costs of system installation, post installation maintenance and/or repair works. Grain convey system comprises at least one body member (1) comprising at least one sliding member (1a) in a slide structure extending parallel to ground and vertically in extending direction of secondary convey unit along edge far from ground, in structure convenient for location onto ground in fixed and balanced manner, preferably in frame form, providing convey of members of system connected thereon. In addition, it also comprises a least one convey member (2) preferably, band conveyor, sliding metal conveyor and/or foldable metal conveyor located onto sliding member (1a) parallel to ground and convenient for moving in two different directions along extending axis of sliding member (1a), providing convey of grains transferred from secondary convey unit on axis parallel to ground and vertical to extending axis of secondary convey unit and thus providing transfer into primary convey units (A). In addition, it comprises at least one primary driving member (3), preferably a motor, connected to convey member (2), providing movement of convey member (2) in primary direction and thus moving grains transferred from secondary convey unit in primary direction on axis parallel to ground and vertical to extending direction of secondary convey unit and thus helping transfer thereof into one of primary convey units (A), providing convey member (2) in a secondary direction and moving grains transferred from secondary convey unit in secondary direction on axis parallel to ground and in extending direction of secondary convey unit and thus helping transfer into other one of primary convey units (A), at least one secondary driving member (4) preferably a motor, connected to body member (1) and convey member (2), providing sliding of convey member (2) in two different directions parallel to ground along extending axis of sliding member (1a) and bringing into a position convenient for transfer of grains into primary convey units (A).

In a representative application of grain convey system developed under the invention, the body member (1) provides location of system in a stable and balanced manner between secondary convey unit and primary convey unit (A). Secondary driving member (4) provides sliding of convey member (1) on sliding member (1a) in extending direction of sliding member (1a) parallel to ground and brining it into a position convenient for transfer of grain into primary convey units (A). Thereafter upon moving convey member (2) in primary direction by means of primary driving member (3), grains transmitted from secondary convey unit into one of primary convey units (A). By movement of convey member (2) in secondary direction by primary driving member (3), transfer of grains from primary convey units (A) into another thereof is provided.

In a preferred application of the invention, said grain convey system comprises at least one protection member (5) preferably in belt structure, connected to said body member (1), located in a manner to leave far from said sliding member (1a) on axis extending vertical to ground on edges parallel to extending axis of said sliding member (1a), preventing dispersion of grains conveyed on said convey member (2) and/or grain dusts from said convey member (2) into surrounding.

In a preferred application of the invention, said grain convey system comprises at least a moving member (6) comprising preferably a set out spring mechanism connected to said body member (1) and said protection member (5) providing movement of said protection together with said convey member (2).

In a preferred application of the invention, said grain convey system comprises at least two secondary protection members (7) convenient for convey of grain thereinto and in chamber structure with open surface near ground, connected to said convey member (2) and located on edges of said convey member (2) extending vertical to axis whereon moved, providing convey of grains sent from said convey member (2) into said primary convey units (A) without dispersing around.

In another preferred application of the invention, said grain convey system comprises at least four feet (8) with adjustable distance on axis extending vertical to ground, connected to said body member (1) and providing location of system onto ground in a balanced and sound manner.

In another preferred application of the invention, said grain convey system comprises at least one primary conversion member (9) preferably in a gear mechanism structure, connected to said primary driving member (3) and providing change of direction of motion obtained from said primary driving member (3).

In another preferred application of the invention, said grain convey system comprises at least one secondary conversion member (10) preferably in a gear mechanism structure, connected to said secondary driving member (4) and providing change of direction of motion obtained from said secondary driving member (4).

Grain convey system developed under the invention provides distribution of grains into said primary convey units (A) effectively and thus convey thereof and does not need construction of a pit convenient for location into said primary convey unit (A) or provides reduction of pit depth. Thus installation of system and maintenance and repair works of members of system after installation are easy and time period and costs for performance of operation are reduced, reduction in power needed for convey in a manner to remove grains from ground and number of system members used for convey of grains is provided and a more efficiently working, safer and effective grain convey system is achieved.

## Claims

1. A grain convey system comprising at least one grain collection unit which is a good taking/tram pit in a structure convenient for collection of grains therein comprising at least a primary opening allowing pour of grains therein and allowing removal of grains therein, at least a storage unit providing storage of grains therein, at least two primary convey units (A) providing transfer of grains into storage unit by carrying them in a way removing from ground, at least a secondary convey unit, extending from secondary opening to primary convey unit (A) parallel to ground or extending in a manner to form an angle with ground, providing transfer of grains taken from grain collection unit to primary convey units (A) convenient for use in at least a grain storage system, providing installation of primary convey units (A) directly on the ground without need for any pit and thus providing reduction of number of members used in grain storage system for distribution and transfer of grain to primary convey units (A) and reduction in power needed for convey of grain to said storage unit, facilitating access to members of the system for repair works after installation, reduction in time period and costs of system installation, post installation maintenance and/or repair works and **characterized by comprising;**
- at least one body member (1) comprising at least a sliding member (1a) in a slide structure extending parallel to ground and vertically in extending direction of said secondary convey unit along edge far from ground, in structure convenient for location onto ground in fixed and balanced manner, providing convey of members of system connected thereon;
- at least one convey member (2) located onto said sliding member (1a) parallel to ground and convenient for moving in two different directions along extending axis of said sliding member (1a), providing convey of grains transferred from said secondary convey unit on axis parallel to ground and vertical to extending axis of said secondary convey unit and thus providing transfer into said primary convey units (A);
- at least one primary driving member (3), connected to convey member (2), providing movement of convey member (2) in primary direction and thus moving grains transferred from secondary convey unit in primary direction on axis parallel to ground and vertical to extending direction of secondary convey unit and thus helping transfer thereof into one of primary convey units (A), providing convey member (2) in a secondary direction and moving grains transferred from secondary convey unit in secondary direction on axis parallel to ground and in extending direction of secondary convey unit and thus helping transfer into other one of primary convey units (A),
- at least one secondary driving member (4), connected to said body member (1) and said convey member (2), providing sliding of said convey member (2) in two different directions parallel to ground along extending axis of said sliding member (1a) and bringing into a position convenient for transfer of grains into said primary convey units (1).

2. A grain convey system according to claim 1 and **characterized in that;** said grain collection unit being a goods intake/tram pit in hopper form.

3. A grain convey system according to claim 1 and **characterized in that;** said storage unit being bin, horizontal store and/or vertical store structure.

4. A grain convey system according to claim 1 and **characterized in that;** said primary convey units (A) being elevator.

5. A grain convey system according to claim 1 and **characterized in that;** said secondary convey unit being chain conveyor, Belt conveyor and/or screw spiral conveyor.

6. A grain convey system according to claim 1 and **characterized in that;** said body member (1) being in form of frame.

7. A grain convey system according to claim 1 and **characterized in that;** said convey member (2) being belt conveyor, sliding metal conveyor and/or foldable metal conveyor.

8. A grain convey system according to claim 1 and **characterized in that;** said primary driving member (3) being a motor.

9. A grain convey system according to claim 1 and **characterized in that;** said secondary driving member (4) being a motor.

10. A grain convey system according to claim 1 and **characterized by comprising;** at least one protection member (5) preferably in belt structure, connected to said body member (1), located in a manner to leave far from said sliding member (1a) on axis extending vertical to ground on edges parallel to extending axis of said sliding member (1a), preventing dispersion of grains conveyed on said convey member (2) and/or grain dusts from said convey member (2) into surrounding.

11. A grain convey system according to claim 10 and **characterized by comprising;** at least one moving member (6) comprising preferably a set out spring mechanism connected to said body member (1) and said protection member (5) providing movement of said protection member (5) together with said convey member (2).

12. A grain convey system according to claim 1 and **characterized by comprising;** at least two secondary protection members (7) convenient for convey of grain there into and in chamber structure with open surface near ground, connected to said convey member (2) and located on edges of said convey member (2) extending vertical to axis whereon moved, providing convey of grains sent from said convey member (2) into said primary convey units (A) without dispersing around.

13. A grain convey system according to claim 1 and **characterized by comprising;** at least four feet (8) with adjustable distance on axis extending vertical to ground, connected to said body member (1) and providing location of system onto ground in a balanced and sound manner.

14. A grain convey system according to claim 1 and **characterized by comprising;** at least one primary conversion member (9) preferably in a gear mechanism structure, connected to said primary driving member (3) and providing change of direction of motion obtained from said primary driving member (3).

15. A grain convey system according to claim 1 and **characterized by comprising;** at least one secondary conversion member (10) preferably in a gear mechanism structure, connected to said secondary driving member (4) and providing change of direction of motion obtained from said secondary driving member (4).

## Patentansprüche

1. Getreidefördersystem, umfassend mindestens eine Getreidesammeleinheit, bei der es sich um eine Warenaufnahme/einen Transportschacht in einer Struktur handelt, die für eine Sammlung von Getreidekörnern darin geeignet ist und die mindestens einer primäre Öffnung umfasst, die ein Einfüllen von Getreidekörnern darin ermöglicht und ein Entnehmen von Getreidekörnern daraus ermöglicht, mindestens eine Lagereinheit, die eine Lagerung von Getreidekörnern darin bereitstellt, mindestens zwei primäre Fördereinheiten (A), die eine Übertragung von Getreidekörnern in die Lagereinheit bereitstellen, indem sie diese auf eine Weise transportieren, auf die sie von dem Boden entfernt werden, mindestens eine sekundäre Fördereinheit, die sich von einer sekundären Öffnung zu der primären Fördereinheit (A) parallel zu dem Boden erstreckt oder sich auf eine Weise erstreckt, dass sie einen Winkel mit dem Boden bildet, wodurch eine Übertragung von Getreidekörnern, die von einer Getreidesammeleinheit entnommen wurden, zu primären Fördereinheiten (A) bereitgestellt wird, die für eine Verwendung in mindestens einem Getreidespeichersystem geeignet sind, wodurch eine Installation von primären Fördereinheiten (A) direkt auf dem Boden ohne die Notwendigkeit eines jeglichen Schachts bereitgestellt wird und somit eine Reduzierung der Anzahl der in dem Getreidespeichersystem zur Verteilung und Übertragung des Getreides an primäre Fördereinheiten (A) verwendeten Elemente und eine Reduzierung der für die Beförderung des Getreides zu der Speichereinheit erforderlichen Leistung bereitgestellt wird, wodurch ein Zugriff auf Systemelemente für Reparaturarbeiten nach der Installation, eine Reduzierung eines Zeitraums und von Kosten für die Systeminstallation, eine Wartung nach der Installation und/oder Reparaturarbeiten vereinfacht werden, und **gekennzeichnet dadurch, das es Folgendes umfasst;**
- mindestens ein Körperelement (1), das mindestens ein Gleitelement (1a) in einer Gleitstruktur umfasst, die sich parallel zu dem Boden und vertikal in einer Erstreckungsrichtung der sekundären Fördereinheit entlang einer Kante weit von dem Boden weg erstreckt, in einer Struktur, die für eine feste und ausgewogene Anordnung auf dem Boden geeignet ist, wodurch eine Beförderung der damit verbundenen Systemelemente bereitgestellt wird,
- mindestens ein Förderelement (2), das auf dem Gleitelement (1a) parallel zu dem Boden angeordnet ist und dazu geeignet ist, sich in zwei unterschiedliche Richtungen entlang der Erstreckungsachse des Gleitelements (1a) zu bewegen, wodurch eine Förderung der von der sekundären Fördereinheit übertragenen Getreidekörner auf einer Achse bereitgestellt wird, die parallel zu dem Boden und vertikal zu der Erstreckungsachse der sekundären Fördereinheit verläuft, und somit eine Übertragung in die primären Fördereinheiten (A) bereitgestellt wird,
- mindestens ein primäres Antriebselement (3), das mit dem Förderelement (2) verbunden ist, wodurch eine Bewegung des Förderelements (2) in einer primären Richtung bereitgestellt wird und somit von der sekundären Fördereinheit übertragene Getreidekörner in der primären Richtung auf einer Achse parallel zu dem Boden und senkrecht zu der Erstreckungsrichtung der sekundären Fördereinheit bewegt werden und somit eine Übertragung davon in eine der primären Fördereinheiten (A) unterstützt wird, wodurch ein Förderelement (2) in einer sekundären Richtung bereitgestellt wird und die von der sekundären Fördereinheit übertragenen Getreidekörner in einer sekundären Richtung auf einer Achse parallel zu dem Boden und in der Erstreckungsrichtung der sekundären Fördereinheit bewegt werden und somit eine Übertragung in eine andere der primären Fördereinheiten (A) unterstützt wird,
- mindestens ein sekundäres Antriebselement (4), das mit dem Körperelement (1) und dem Förderelement (2) verbunden ist, wodurch ein Gleiten des Förderelements (2) in zwei unterschiedlichen Richtungen parallel zu dem Boden entlang einer Erstreckungsachse des Gleitelements (1a) und ein Bringen in eine für die Übertragung der Getreidekörner in die primären Fördereinheiten (1) geeignete Position bereitgestellt wird.

2. Getreidefördersystem nach Anspruch 1, und **dadurch gekennzeichnet, dass**; es sich bei der Getreidesammeleinheit um eine Warenaufnahme/einen Transportschacht in Trichterform handelt.

3. Getreidefördersystem nach Anspruch 1, und **dadurch gekennzeichnet, dass;** es sich bei der Lagereinheit um einen Behälter, eine horizontale Lager- und/oder eine vertikale Lagerstruktur handelt.

4. Getreidefördersystem nach Anspruch 1, und **dadurch gekennzeichnet, dass**; es sich bei den primären Fördereinheiten (A) um einen Aufzug handelt.

5. Getreidefördersystem nach Anspruch 1, und **dadurch gekennzeichnet, dass**; es sich bei der sekundären Fördereinheit um einen Kettenförderer, einen Bandförderer und/oder einen Spiralschneckenförderer handelt.

6. Getreidefördersystem nach Anspruch 1, und **dadurch gekennzeichnet, dass;** das Körperelement (1) die Form eines Rahmens hat.

7. Getreidefördersystem nach Anspruch 1, und **dadurch gekennzeichnet, dass**; es sich bei dem Förderelement (2) um einen Bandförderer, einen Gleitmetallförderer und/oder einen faltbaren Metallförderer handelt.

8. Getreidefördersystem nach Anspruch 1, und **dadurch gekennzeichnet, dass;** es sich bei dem primären Antriebselement (3) um einen Motor handelt.

9. Getreidefördersystem nach Anspruch 1, und **dadurch gekennzeichnet, dass;** es sich bei dem sekundären Antriebselement (4) um einen Motor handelt.

10. Getreidefördersystem nach Anspruch 1, und **dadurch gekennzeichnet, dass** es mindestens ein Schutzelement (5), vorzugsweise in Riemenbauweise, **umfasst;** das mit dem Körperelement (1) verbunden und so angeordnet ist, dass es sich auf einer Achse, die sich vertikal zu dem Boden erstreckt, an Kanten, die parallel zu der Erstreckungsachse des Gleitelements (1a) verlaufen, weit von dem Gleitelement (1a) weg losbewegt, wodurch eine Verteilung der auf dem Förderelement (2) beförderten Getreidekörner und/oder von Getreidestaub von dem Förderelement (2) in die Umgebung verhindert wird.

11. Getreidefördersystem nach Anspruch 10, und **dadurch gekennzeichnet, dass** es mindestens ein bewegliches Element (6) **umfasst;** das vorzugsweise einen festgelegten Federmechanismus umfasst, der mit dem Körperelement (1) und dem Schutzelement (5) verbunden ist, wodurch eine Bewegung des Schutzelements (5) zusammen mit dem Förderelement (2) bereitgestellt wird.

12. Getreidefördersystem nach Anspruch 1, und **dadurch gekennzeichnet, dass** es mindestens zwei sekundäre Schutzelemente (7) **umfasst;** die für eine Beförderung von Getreide dort hinein und in einer Kammerstruktur mit offener Oberfläche in Bodennähe geeignet sind, mit dem Förderelement (2) verbunden sind und an den Kanten des Förderelements (2) angeordnet sind, die sich vertikal zu der Achse erstrecken, auf der es bewegt wird, wodurch eine Beförderung von Getreidekörnern bereitgestellt wird, die von dem Förderelement (2) in die primären Fördereinheiten (A) gesendet werden, ohne sich zu verteilen.

13. Getreidefördersystem nach Anspruch 1, und **dadurch gekennzeichnet, dass** es mindestens vier Füße (8) mit einstellbarem Abstand auf einer Achse **umfasst;** die sich vertikal zu dem Boden erstreckt, die mit dem Körperelement (1) verbunden sind und eine ausgewogene und sichere Anordnung des Systems auf dem Boden bereitstellen.

14. Getreidefördersystem nach Anspruch 1, und **dadurch gekennzeichnet, dass** es mindestens ein primäres Umwandlungselement (9), vorzugsweise in Form einer Getriebemechanismusstruktur, **umfasst;** das mit dem primären Antriebselement (3) verbunden ist und eine von dem primären Antriebselement (3) ausgehende Änderung der Bewegungsrichtung bereitstellt.

15. Getreidefördersystem nach Anspruch 1, und **dadurch gekennzeichnet, dass** es mindestens ein sekundäres Umwandlungselement (10), vorzugsweise in Form einer Getriebemechanismusstruktur, **umfasst;** das mit dem sekundären Antriebselement (4) verbunden ist und eine von dem sekundären Antriebselement (4) ausgehende Änderung der Bewegungsrichtung bereitstellt.

## Revendications

1. Système de transport de grains comprenant au moins une unité de collecte de grains qui est une fosse de réception de marchandises/tram dans une structure pratique pour la collecte de grains à l'intérieur de celle-ci, comprenant au moins une ouverture principale permettant le déversement des grains à l'intérieur de celle-ci et permettant l'enlèvement des grains à l'intérieur de celle-ci, au moins une unité de stockage assurant le stockage des grains à l'intérieur de celle-ci, au moins deux unités de transport principales (A) assurant le transfert des grains dans l'unité de stockage en les portant de manière à les retirer du sol, au moins une unité de transport secondaire, s'étendant de l'ouverture secondaire à l'unité de transport principale (A) parallèle au sol ou s'étendant de manière à former un angle avec le sol, permettant le transfert des grains prélevés de l'unité de collecte des grains vers les unités de transport principales (A) pratiques pour une utilisation dans au moins un système de stockage de grains, permettant l'installation d'unités de transport principales (A) directement sur le sol sans avoir besoin d'une fosse et permettant ainsi une réduction du nombre d'éléments utilisés dans le système de stockage de grains pour la distribution et le transfert du grain vers les unités de transport principales (A) et une réduction de la puissance nécessaire pour le transport des grains vers ladite unité de stockage, ce qui facilite l'accès aux éléments du système pour des travaux de réparation après l'installation, permet une réduction du délai et des coûts d'installation du système, des travaux de maintenance et/ou de réparation post-installation et **caractérisé en ce qu'il comprend** ;
- au moins un élément de corps (1) comprenant au moins un élément coulissant (1a) dans une structure coulissante s'étendant parallèlement au sol et verticalement dans la direction d'extension de ladite unité de transport secondaire le long d'un bord éloigné du sol, dans une structure pratique pour un positionnement au sol de manière fixe et équilibrée, assurant le transport des éléments du système raccordés à celui-ci ;
- au moins un élément de transport (2) situé sur ledit élément coulissant (1a) parallèle au sol et pratique pour se déplacer dans deux directions différentes le long de l'axe d'extension dudit élément coulissant (1a), assurant le transport des grains transférés depuis ladite unité de transport secondaire sur un axe parallèle au sol et vertical par rapport à l'axe d'extension de ladite unité de transport secondaire et assurant ainsi le transfert dans lesdites unités de transport principales (A) ;
- au moins un élément d'entraînement principal (3), relié à l'élément de transport (2), assurant le mouvement de l'élément de transport (2) dans la direction principale et déplaçant ainsi les grains transférés depuis l'unité de transport secondaire dans la direction principale sur un axe parallèle au sol et vertical par rapport à la direction d'extension de l'unité de transport secondaire et facilitant ainsi son transfert dans l'une des unités de transport principales (A), fournissant un élément de transport (2) dans une direction secondaire et déplaçant les grains transférés depuis l'unité de transport secondaire dans une direction secondaire sur un axe parallèle au sol et dans la direction d'extension de l'unité de transport secondaire et aidant ainsi le transfert dans une autre des unités de transport principales (A),
- au moins un élément d'entraînement secondaire (4), relié audit élément de corps (1) et audit élément de transport (2), assurant le coulissement dudit élément de transport (2) dans deux directions différentes parallèles au sol le long de l'axe d'extension dudit élément coulissant (1a) et amenant dans une position pratique pour le transfert des grains dans lesdites unités de transport principales (1).

2. Système de transport de grains selon la revendication 1 et **caractérisé en ce que ;** ladite unité de collecte de grains étant une fosse d'admission de marchandises/tram sous forme de trémie.

3. Système de transport de grains selon la revendication 1 et **caractérisé en ce que ;** ladite unité de stockage étant une structure de bac, de magasin horizontal et/ou de magasin vertical.

4. Système de transport de grains selon la revendication 1 et **caractérisé en ce que ;** lesdites unités de transport principales (A) étant un ascenseur.

5. Système de transport de grains selon la revendication 1 et **caractérisé en ce que ;** ladite unité de transport secondaire étant un convoyeur à chaîne, un convoyeur à bande et/ou un convoyeur à vis en spirale.

6. Système de transport de grains selon la revendication 1 et **caractérisé en ce que ;** ledit élément de corps (1) étant en forme de cadre.

7. Système de transport de grains selon la revendication 1 et **caractérisé en ce que ;** ledit élément de transport (2) étant un convoyeur à bande, un convoyeur métallique coulissant et/ou un convoyeur métallique pliable.

8. Système de transport de grains selon la revendication 1 et **caractérisé en ce que ;** ledit élément d'entraînement principal (3) étant un moteur.

9. Système de transport de grains selon la revendication 1 et **caractérisé en ce que ;** ledit élément d'entraînement secondaire (4) étant un moteur.

10. Système de transport de grains selon la revendication 1 et **caractérisé en ce qu'il comprend** ; au moins un élément de protection (5), de préférence en structure de courroie, relié audit élément de corps (1), situé de manière à s'éloigner dudit élément coulissant (1a) sur un axe s'étendant verticalement par rapport au sol sur des bords parallèles à l'axe d'extension dudit élément coulissant (1a), empêchant la dispersion des grains transportés sur ledit élément de transport (2) et/ou des poussières de grains dudit élément de transport (2) vers l'environnement.

11. Système de transport de grains selon la revendication 10 et **caractérisé en ce qu'il comprend** ; au moins un élément mobile (6) comprenant de préférence un mécanisme à ressort déployé relié audit élément de corps (1) et audit élément de protection (5) assurant le mouvement dudit élément de protection (5) conjointement avec ledit élément de transport (2).

12. Système de transport de grains selon la revendication 1 et **caractérisé en ce qu'il comprend** ; au moins deux éléments de protection secondaires (7) pratiques pour le transport des grains vers l'intérieur et dans une structure de chambre à surface ouverte proche du sol, reliés audit élément de transport (2) et situés sur les bords dudit élément de transport (2) s'étendant verticalement par rapport à l'axe sur lequel il est déplacé, assurant le transport des grains envoyés depuis ledit élément de transport (2) vers lesdites unités de transport principales (A) sans se disperser.

13. Système de transport de grains selon la revendication 1 et **caractérisé en ce qu'il comprend** ; au moins quatre pieds (8) à distance réglable sur un axe s'étendant verticalement par rapport au sol, reliés audit élément de corps (1) et permettant un positionnement du système sur le sol d'une manière équilibrée et sûre.

14. Système de transport de grains selon la revendication 1 et **caractérisé en ce qu'il comprend** ; au moins un élément de conversion principal (9), de préférence dans une structure de mécanisme à engrenages, connecté audit élément d'entraînement principal (3) et fournissant un changement de direction de mouvement obtenu à partir dudit élément d'entraînement principal (3).

15. Système de transport de grains selon la revendication 1 **caractérisé en ce qu'il comprend** ; au moins un élément de conversion secondaire (10), de préférence dans une structure de mécanisme à engrenages, connecté audit élément d'entraînement secondaire (4) et fournissant un changement de direction de mouvement obtenu à partir dudit élément d'entraînement secondaire (4).
